# EUROPEAN PATENT APPLICATION

(11) **EP 4 516 158 A1**
(43) Date of publication of application: **05.03.2025**
(21) Application number: 23826218.2
(22) Date of filing: 13.06.2023
(51) Int. Cl.: A45C 11/36, A45C 11/34, G06F 3/01

(54) **PROTECTIVE CASE AND ELECTRONIC APPARATUS**

(30) Priority: 22.06.2022 CN 202221580169 U
(71) Applicant: Huawei Technologies Co., Ltd., Shenzhen, Guangdong 518129 (CN)
(72) Inventor: CHEN, Ji, Shenzhen, Guangdong 518129 (CN)
(74) Representative: Isarpatent
(86) International application number: PCT/CN2023/100012
(87) International publication number: WO 2023/246569

(57) **Abstract**

A protective cover (010) and an electronic device (001) are provided. The electronic device (001) includes a first cover (100), a second cover (200), and a hinged part (300). The first cover (100) and the second cover (200) are rotatively connected by using the hinged part (300) around an axis (010a), the first cover (100) is configured to connect to a first electronic component (030), and the second cover (200) is configured to connect to a second electronic component (050). The hinged part (300) includes a first hinged structure (310) and a second hinged structure (330), an accommodation cavity (011) extending along the axis (010a) is formed between the first hinged structure (310) and the second hinged structure (330), and the accommodation cavity (011) is configured to accommodate a stylus (400). The stylus (400) includes a magnetic member (410), and the magnetic member (410) is configured to magnetically attract the first electronic component (030) or the second electronic component (050). In the protective cover (010), the stylus (400) is stored by using the accommodation cavity (011) between the first hinged structure (310) and the second hinged structure (330). The first hinged structure (310) and the second hinged structure (330) limit movement of the stylus (400), so that a probability that the stylus (400) falls between the first cover (100) and the second cover (200) can be reduced.

## Description

This application claims priority to Chinese Patent Application No. 202221580169.5, filed with the China National Intellectual Property Administration on June 22, 2022 and entitled "PROTECTIVE COVER AND ELECTRONIC DEVICE", which is incorporated herein by reference in its entirety.

### TECHNICAL FIELD

This application relates to the field of electronic device technologies, and in particular, to a protective cover and an electronic device.

### BACKGROUND

Currently, a stylus of a tablet or a two-in-one computer is basically magnetically attracted to an upper edge of the tablet. When the tablet is moved, the stylus is prone to fall due to a collision. This causes damage to and loss of the stylus. A user has a high requirement for stylus storage. A combination of stylus storage and a protective cover meets a user scenario, and resolves problems of stylus falling and loss. In a current stylus storage solution of a protective cover, placement and taking of the stylus are not convenient enough, or an overall appearance of a product is affected.

### SUMMARY

This application provides a protective cover and an electronic device, to facilitate placement of a stylus.

A first aspect of embodiments of this application provides a protective cover. The protective cover includes a first cover, a second cover, and a hinged part. The first cover and the second cover are rotatively connected by using the hinged part around an axis, the first cover is configured to connect to a first electronic component, and the second cover is configured to connect to a second electronic component. The rotating shaft further includes a stylus. The hinged part includes a first hinged structure and a second hinged structure, an accommodation cavity extending along the axis is formed between the first hinged structure and the second hinged structure, and the accommodation cavity is configured to accommodate the stylus. The stylus includes a magnetic member, and the magnetic member is configured to magnetically attract the first electronic component or the second electronic component.

In the protective cover, the stylus is stored by using the accommodation cavity between the first hinged structure and the second hinged structure. The first hinged structure and the second hinged structure limit movement of the stylus, so that a probability that the stylus falls between the first cover and the second cover can be reduced. This facilitates placement of the stylus. When the first electronic component or the second electronic component is installed in the protective cover, the stylus magnetically attracts the first electronic component or the second electronic component by using the magnetic member, so that when the first electronic component and the second electronic component move relative to the hinged part, the stylus can be driven to leave the accommodation cavity.

Based on the first aspect, in a possible implementation, the first cover includes a first sliding member and a second sliding member. The first sliding member is rotatively connected to the second cover by using the hinged part. The second sliding member is slidably connected to the first sliding member, and the second sliding member is configured to connect to the first electronic component, to drive the first electronic component to be close to or away from the hinged part.

In the possible implementation, the second sliding member of the protective cover can move relative to the hinged part, to drive the first electronic component to move relative to the hinged part. When the stylus magnetically attracts the first electronic component, the second electronic component moves relative to the hinged part, so that the stylus can be taken away from the accommodation cavity.

Based on the first aspect, in a possible implementation, the second cover has an open location and a closed location relative to the first cover. The second cover in the open location is capable of rotating around the axis to the closed location. When the second cover is at the closed location relative to the first cover, the first cover is parallel to the second cover.

In the possible implementation, the second cover and the first cover of the protective cover can rotatively rotate to locations parallel to each other, so that the first cover and the second cover can better protect the first electronic component and the second electronic component.

Based on the first aspect, in a possible implementation, the second cover includes a first cover part, a rotation member, and a second cover part. The first cover part is rotatively connected to the first cover by using the hinged part. The second cover part is rotatively connected to the first cover part by using the rotation member, and the second cover part is configured to connect to the second electronic component.

In the possible implementation, when the first cover part rotates relative to the second cover part, the second electronic component can be driven to move. In this way, an end that is of the second electronic component and that is close to the hinged part moves relative to the hinged part. In this process, if the stylus magnetically contracts the second electronic component, the second electronic component can drive the stylus to leave the accommodation cavity.

Based on the first aspect, in a possible implementation, an axis of relative rotation of the first cover part and the second cover part is parallel to the axis.

In the possible implementation, when the second electronic component is in a flat shape and is parallel to the axis, rotation of the first cover part relative to the second cover part keeps the second electronic component in a state parallel to the axis. This facilitates that a user places and operates the second electronic component.

Based on the first aspect, in a possible implementation, the magnetic member includes a ferromagnetic metal block.

In the possible implementation, magnetic attraction between the stylus and the first electronic component or the second electronic component is implemented by using a magnetic field on the first electronic component or the second electronic component. When there is also a ferromagnetic metal in the first cover, the second cover, or the hinged part, the stylus does not actively absorb the ferromagnetic metal in the first cover, the second cover, or the hinged part.

Based on the first aspect, in a possible implementation, when the stylus is accommodated in the accommodation cavity, on a projection surface perpendicular to the axis, a projection of the stylus is located in a projection of the hinged part.

In the possible implementation, when the stylus is accommodated in the accommodation cavity, the stylus basically does not interfere with relative rotation of the first cover and the second cover.

Based on the first aspect, in a possible implementation, the first hinged structure includes a first connector and a second connector. The first connector and the second connector are rotatively connected around the axis, the first connector is connected to the first cover, and the second connector is connected to the second cover. A damping member is disposed between the first connector and the second connector, to provide a friction force when the first connector rotates relative to the second connector.

In the possible implementation, when the first cover and the second cover rotate relative to each other, the first connector and the second connector are driven to rotate relative to each other. The damping member is disposed so that rotation can be performed only when there is sufficient torque between the first connector and the second connector. Therefore, when no sufficient torque is applied to the first cover or the second cover, the first cover and the second cover may maintain relative locations.

Based on the first aspect, in a possible implementation, a protective layer is disposed on an inner wall of the accommodation cavity, and the protective layer is configured to be in contact with the stylus.

In the possible implementation, the protective layer is in contact with the stylus, so that a probability that the stylus is scratched can be reduced.

A second aspect of embodiments of this application provides an electronic device, including the first electronic component and the protective cover according to any implementation of the first aspect. The first electronic component is connected to the first cover.

The electronic device includes the first electronic component by using the first cover and the second cover. When the first electronic component or the second electronic component is installed in the protective cover, the stylus magnetically attracts the first electronic component or the second electronic component by using the magnetic member, so that when the first electronic component and the second electronic component move relative to the hinged part, the stylus can be driven to leave the accommodation cavity.

Based on the second aspect, in a possible implementation, the first electronic component is in a communication connection to the second electronic component.

In the possible implementation, the first electronic component and the second electronic component implement cooperative operation through the communication connection.

Based on the second aspect, in a possible implementation, the first electronic component includes a keyboard or a touchpad.

In the possible implementation, the keyboard or the touchpad may be used as an input device. When the first electronic component is in a communication connection to the second electronic component, information is input to the second electronic component by using the first electronic component. When the first electronic component is the touchpad, the stylus moves on touchpad, so that movement path information of the stylus may be input to the second electronic component.

Based on the second aspect, in a possible implementation, the electronic device further includes the second electronic component. The second electronic component includes a touchscreen and a processor, and the stylus is configured to input data to the processor by using the touchscreen.

In the possible implementation, the second electronic component can input data by using the stylus, and the data input by the stylus includes the movement path information of the stylus on the touchscreen.

### BRIEF DESCRIPTION OF DRAWINGS

FIG. 1 is a diagram of a structure of an electronic device according to an embodiment of this application, where a second cover is in an open location relative to a first cover;
FIG. 2 is a diagram of a structure of an electronic device according to an embodiment of this application, where a second cover is in a closed location relative to a first cover;
FIG. 3 is a diagram of a structure of an electronic device according to an embodiment of this application, where a second sliding member slides, relative to a first sliding member, to a location away from a hinged part, and a stylus magnetically attracts a first electronic component;
FIG. 4 is a diagram of a structure of an electronic device from another perspective according to an embodiment of this application, where a second sliding member slides, relative to a first sliding member, to a location away from a hinged part, and a stylus magnetically attracts a first electronic component;
FIG. 5 is a diagram of a structure of an electronic device according to an embodiment of this application, where a second cover is in an open location relative to a first cover, and a second cover part rotates by an angle relative to a first cover part;
FIG. 6 is a diagram of a structure of an electronic device from another perspective according to an embodiment of this application, where a second cover is in an open location relative to a first cover, and a second cover part rotates by an angle relative to a first cover part;
FIG. 7 is a diagram of a structure of an electronic device according to an embodiment of this application, where a second cover is in an open location relative to a first cover, and a stylus magnetically attracts an end that is of a second electronic component and that is away from a hinged part;
FIG. 8 is a diagram of a structure of an electronic device according to an embodiment of this application, where a second sliding member slides, relative to a first sliding member, to a location away from a hinged part, and a stylus magnetically attracts an end that is of a second electronic component and that is away from the hinged part;
FIG. 9 is a sectional view of a first hinged structure according to an embodiment of this application; and
FIG. 10 is a diagram of modules of a second electronic component according to an embodiment of this application.

### Description of reference signs of main components:

Electronic device 001
Protective cover 010
First electronic component 030
Second electronic component 050
First cover 100
Second cover 200
Hinged part 300
First hinged structure 310
Second hinged structure 330
Stylus 400
Magnetic member 410
First sliding member 110
Second sliding member 130
First cover part 210
Second cover part 230
Rotation member 250
Axis 010a
First connector 311
Second connector 313
Third connector 331
Fourth connector 333
Accommodation cavity 011
Protective layer 0111
Damping member 301
Touchscreen 051
Processor 053
Storage unit 055
First magnetic attraction member 031
Second magnetic attraction member 057
Third magnetic attraction member 059
First end 401
Second end 403

This application is further described in the following specific implementations with reference to the foregoing accompanying drawings.

### DESCRIPTION OF EMBODIMENTS

The following describes implementations of this application by using specific embodiments. A person skilled in the art may easily learn of other advantages and effects of this application based on content disclosed in this specification. Although description of this application is provided with reference to examples of embodiments, this does not mean that features of this application are limited to this implementation. On the contrary, a purpose of describing this application with reference to implementations is to cover another option or modification that may be derived according to claims of this application. For an in-depth understanding of this application, the following descriptions include many specific details. This application may alternatively be implemented without using these details. In addition, to avoid confusion or obfuscation of a focus of this application, some specific details are omitted from the description. It should be noted that embodiments of this application and the features in embodiments may be mutually combined in a case of no conflict.

The following terms "first", "second", and the like are merely used for description, and shall not be understood as an indication or implication of relative importance or implicit indication of a quantity of indicated technical features. Therefore, a feature limited by "first ", "second" and the like may explicitly indicate or implicitly include one or more such features. In description of this application, unless otherwise stated, "a plurality of" means two or more than two. Orientation terms such as "up", "down", "left", and "right" are defined with respect to orientations of components that are schematically placed in accompanying drawings, and it should be understood that these directional terms are relative concepts, are used for relative description and clarification, and may vary accordingly based on a change in the orientation in which the components are disposed in the accompanying drawings.

In this application, if used, unless otherwise expressly specified and limited, the term "connection" should be understood in a broad sense. For example, a "connection" may be a fixed connection, a detachable connection, or an integral connection; or a "connection" may be a direct connection or an indirect connection through an intermediate medium. As used in this specification, the term "and/or" includes any combination and all combinations of one or more related listed items.

When the following embodiments are described in detail with reference to diagrams, for ease of description, a diagram indicating a partial structure of a device is not partially enlarged in accordance with a general scale. In addition, the diagrams are merely examples, and should not limit a protection scope of this application.

To make the objectives, technical solutions, and advantages of this application clearer, the following further describes the implementations of this application in detail with reference to the accompanying drawings.

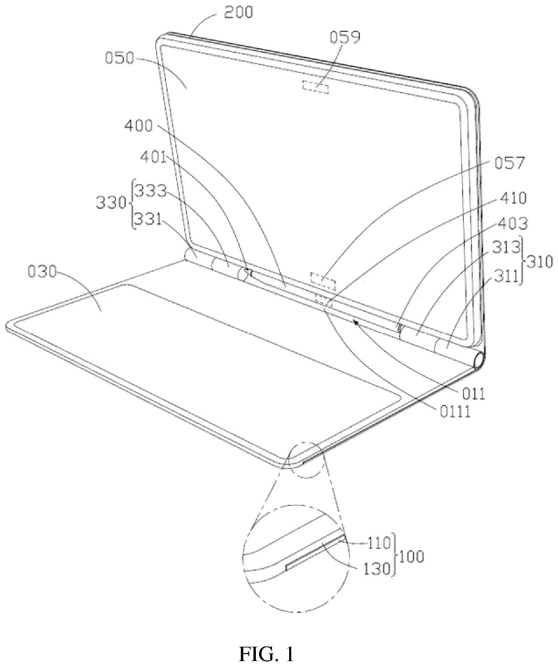

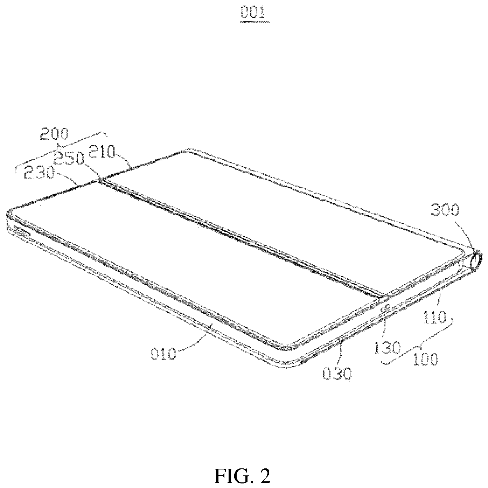

FIG. 1 is a diagram of a structure of an electronic device 001 in an implementation of this application. A second cover 200 is in an open location relative to a first cover 100. FIG. 2 is a diagram of a structure of the electronic device 001 in an implementation of this application. The second cover 200 is in a closed location relative to the first cover 100.

As shown in FIG. 1 and FIG. 2, the electronic device 001 includes a first electronic component 030, a second electronic component 050, and a protective cover 010. The protective cover 010 includes the first cover 100, the second cover 200, and a hinged part 300. The first cover 100 and the second cover 200 are rotatively connected by using the hinged part 300 around an axis 010a. The first electronic component 030 is connected to the first cover 100, and the second electronic component 050 is connected to the second cover 200. When the first cover 100 rotates around the axis 010a relative to the second cover 200, the first electronic component 030 also rotates around the axis 010a relative to the second electronic component 050.

The hinged part 300 includes a first hinged structure 310 and a second hinged structure 330. The first hinged structure 310 and the second hinged structure 330 are spaced in a direction of the axis 010a, so that an accommodation cavity 011 is formed between the first hinged structure 310 and the second hinged structure 330. The electronic device 001 further includes a stylus 400, and the stylus 400 is configured to interact with the first electronic component 030 or the second electronic component 050. The stylus 400 may be accommodated in the accommodation cavity 011, and the stylus 400 is stored by using the accommodation cavity 011.

When the second cover 200 rotates around the axis 010a to be close to the first cover 100, the first electronic component 030 and the second electronic component 050 are clamped between the first cover 100 and the second cover 200. In this case, the first electronic component 030 and the second electronic component 050 limit the stylus 400 in the accommodation cavity 011 to moving out of the accommodation cavity 011 in a direction perpendicular to the axis 010a. However, in the direction of the axis 010a, the first hinged structure 310 and the second hinged structure 330 located at two ends of the stylus 400 may limit the stylus 400 to moving out of the accommodation cavity 011 in the direction of the axis 010a. When the second cover 200 of the electronic device 001 is in the closed location relative to the first cover 100, the stylus 400 can be stably stored in the accommodation cavity 011.

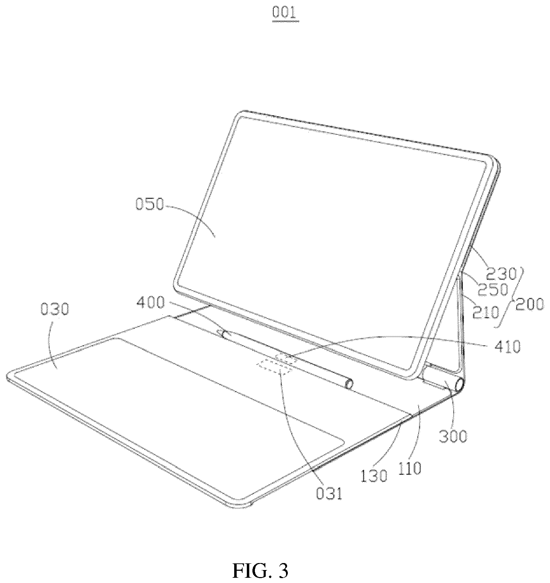

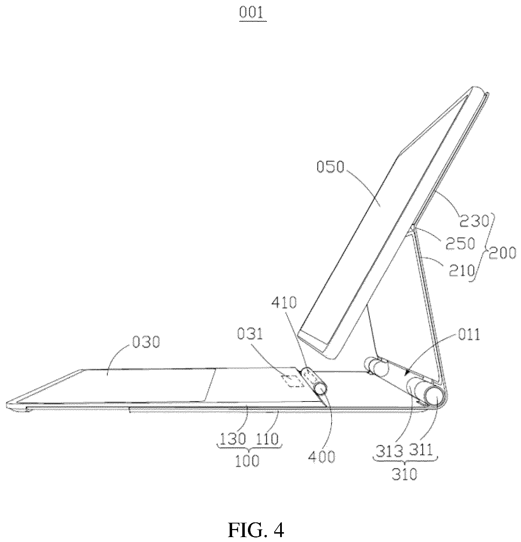

FIG. 3 is a diagram of a structure of the electronic device 001 according to an implementation of this application. A second sliding member 130 slides, relative to a first sliding member 110, to a location away from the hinged part 300, and the stylus 400 magnetically attracts the first electronic component 030. FIG. 4 is a diagram of a structure of the electronic device 001 from another perspective according to an implementation of this application. The second sliding member 130 slides, relative to the first sliding member 110, to the location away from the hinged part 300, and the stylus 400 magnetically attracts the first electronic component 030.

As shown in FIG. 3 and FIG. 4, the first cover 100 includes the first sliding member 110 and the second sliding member 130. The first sliding member 110 is rotatively connected to the second cover 200 by using the hinged part 300. The first sliding member 110 is slidably connected to the second sliding member 130, so that the second sliding member 130 can slide relative to the first sliding member 110 to be close to or away from the hinged part 300. Optionally, the first sliding member 110 includes a first plate body and a sliding slot, the second sliding member 130 includes a second plate body and a sliding bar, and the sliding bar is inserted into the sliding slot. The sliding slot extends in the direction perpendicular to the axis 010a, and the sliding bar slides in the sliding slot, so that the second sliding member 130 can move in the extension direction of the sliding slot. The sliding slot may be disposed on two opposite sides of the first plate body in the direction of the axis 010a, and the sliding bar extends from the second plate body to the first plate body and is inserted into the sliding slot.

An installation member is disposed on the second sliding member 130, and the installation member may be an adhesive. The first electronic component 030 is adhered to the second sliding member 130 by using the adhesive. Therefore, when the second sliding member 130 slides relative to the first sliding member 110, the first electronic component 030 may be driven to slide relative to the first sliding member 110. When the first electronic component 030 slides relative to the first sliding member 110, the first electronic component 030 is relatively close to or away from the accommodation cavity 011. In another embodiment, the first electronic component 030 may be integrally formed with the second sliding member 130. The first electronic component 030 forms the second sliding member 130, so that the first electronic component 030 slides relative to the first sliding member 110.

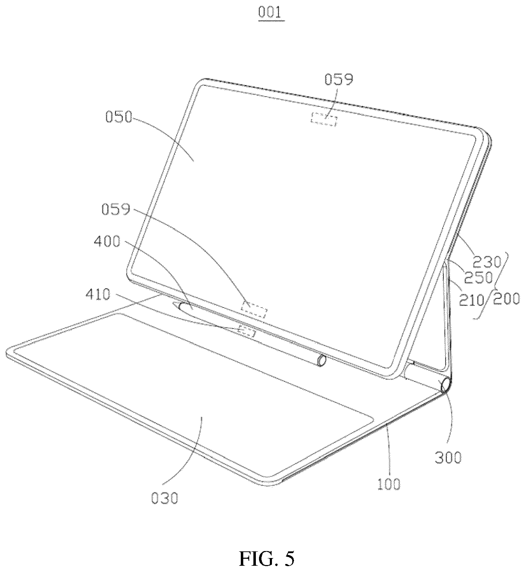

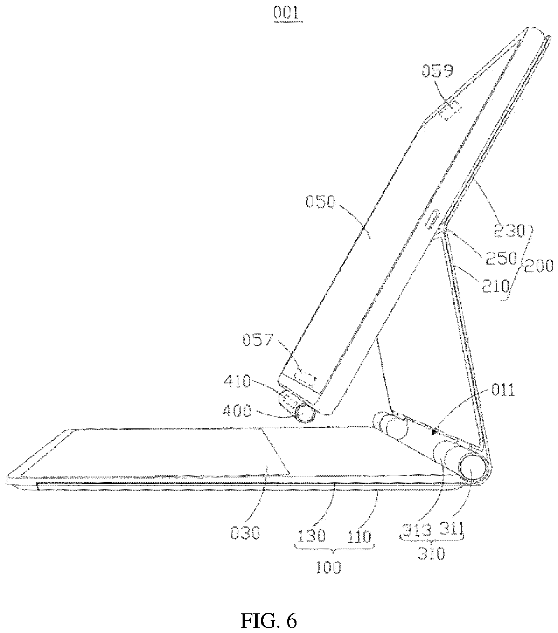

FIG. 5 is a diagram of a structure of the electronic device 001 in an implementation of this application. The second cover 200 is in the open location relative to the first cover 100, and a second cover part 230 rotates by an angle relative to a first cover part 210. FIG. 6 is a diagram of a structure from another perspective in an implementation of this application. The second cover 200 is in the open location relative to the first cover 100, and the second cover part 230 rotates by the angle relative to the first cover part 210.

As shown in FIG. 5 and FIG. 6, the second cover 200 includes the first cover part 210, a rotation member 250, and the second cover part 230. The first cover part 210 is rotatively connected to the second cover part 230 by using the rotation member 250. The first cover part 210 is rotatively connected to the first cover 100 by using the hinged part 300 around the axis 010a. The first cover part 210 is a rigid cover, the second cover part 230 is also a rigid cover, and the rotation member 250 is a flexible deformable member. The first cover part 210 and the second cover part 230 are spaced in the direction perpendicular to the axis 010a, so that a gap extending along the axis 010a is formed between the first cover part 210 and the second cover part 230. One end of the rotation member 250 is fastened to the first cover part 210, and the other end is connected to the second cover part 230, so that relative motion of the first cover part 210 and the second cover part 230 can be implemented through deformation of the rotation member 250. It should be noted that under a same external force, the first cover part 210 and the second cover part 230 are more unlikely to deform than the rotation member 250. Therefore, the first cover part 210 and the second cover part 230 are the rigid covers relative to the rotation member 250, and the rotation member 250 is the flexible deformable member relative to the first cover part 210 and the second cover part 230. In another embodiment, the rotation member 250 may alternatively be of a structure such as a hinge, so that the first cover part 210 and the second cover part 230 may rotate relative to each other.

The gap between the first cover part 210 and the second cover part 230 extends along the axis 010a. When the gap is set to small enough, for example, when a width of the gap between the first cover part 210 and the second cover part 230 is less than 3 mm, relative motion of the first cover part 210 relative to the second cover part 230 may approximately be rotation, and a rotation axis is approximately parallel to the axis 010a. It should be noted that a case that the axis is approximately parallel to the axis 010a herein includes an included angle within 5 degrees between the axis and the axis 010a.

A surface that is of the first cover part 210 and that is away from the second electronic component 050 is completely covered by the rotation member 250. This can enhance connection strength between the first cover part 210 and the rotation member 250, and ensure a more attractive appearance of the first cover part 210. Similarly, a side that is of the second cover part 230 and that is away from the second electronic component 050 is completely covered by the rotation member 250. This can enhance connection strength between the second cover part 230 and the rotation member 250, and ensure a more attractive appearance of the second cover part 230.

As shown in FIG. 3 and FIG. 5, the stylus 400 includes a magnetic member 410, and the magnetic member 410 may magnetically attract the first electronic component 030 or the second electronic component 050.

When a first magnetic attraction member 031 is disposed in the first electronic component 030, and the first magnetic attraction member 031 can magnetically attract the magnetic member 410, the stylus 400 can be adsorbed to a side that is of the first electronic component 030 and that is close to the accommodation cavity 011 through magnetic attraction between the first magnetic attraction member 031 and the magnetic member 410. When the first electronic component 030 is away from the accommodation cavity 011 from a location close to the accommodation cavity 011, the first electronic component 030 may drive the stylus 400 in the accommodation cavity 011 to leave the accommodation cavity 011. In a case in which the first cover 100 includes the first sliding member 110 and the second sliding member 130, when the second sliding member 130 slides relative to the first sliding member 110, and drives the first electronic component 030 to be away from the accommodation cavity 011, the side that is of the first electronic component 030 and that is close to the accommodation cavity 011 absorbs the stylus 400 to move with the first electronic component 030, so that the stylus 400 leaves the accommodation cavity 011. An operator may take out the stylus 400 from the accommodation cavity 011 without extending a hand into the accommodation cavity 011.

When a second magnetic attraction member 057 is disposed in the second electronic component 050, and the second magnetic attraction member 057 can magnetically attract the magnetic member 410, the stylus 400 can be adsorbed to a side that is of the second electronic component 050 and that is close to the accommodation cavity 011 through magnetic attraction between the second magnetic attraction member 057 and the magnetic member 410. When the second electronic component 050 is away from the accommodation cavity 011 from a location close to the accommodation cavity 011, the second electronic component 050 may drive the stylus 400 in the accommodation cavity 011 to leave the accommodation cavity 011. In a case in which the second cover 200 includes the first cover part 210 and the second cover part 230, and the first cover part 210 and the second cover part 230 are approximately coplanar, the stylus 400 located in the accommodation cavity 011 is adsorbed to a side of the second electronic component 050. When the second cover part 230 rotates around the rotation member 250 relative to the first cover part 210, the second cover part 230 drives the side that is of the second electronic component 050 and that is close to the accommodation cavity 011 to be relatively away from the accommodation cavity 011. In this case, the second electronic component 050 drives the stylus 400 to leave the accommodation cavity 011. An operator may take out the stylus 400 from the accommodation cavity 011 without extending a hand into the accommodation cavity 011.

It may be understood that the magnetic member 410 may be a ferromagnetic metal block. The first magnetic attraction member 031 in the first electronic component 030 and the second magnetic attraction member 057 in the second electronic component 050 may be permanent magnets. The ferromagnetic metal block can be magnetized under an action of a magnetic field of the permanent magnet, to magnetically attract the permanent magnet. After the permanent magnet leaves the ferromagnetic metal block, the ferromagnetic metal block has weak magnetism, and it is difficult to absorb another ferromagnetic metal. When a ferromagnetic metal is also in the first cover 100, the second cover 200, or the hinged part 300, the stylus 400 does not actively absorb the ferromagnetic metal in the first cover 100, the second cover 200, or the hinged part 300. Specifically, the ferromagnetic metal block may be a metal block including iron, cobalt, and nickel. The ferromagnetic metal block includes a pure iron block, a pure nickel block, a pure cobalt block, a ferroalloy block, a nickel alloy block, and a cobalt alloy block.

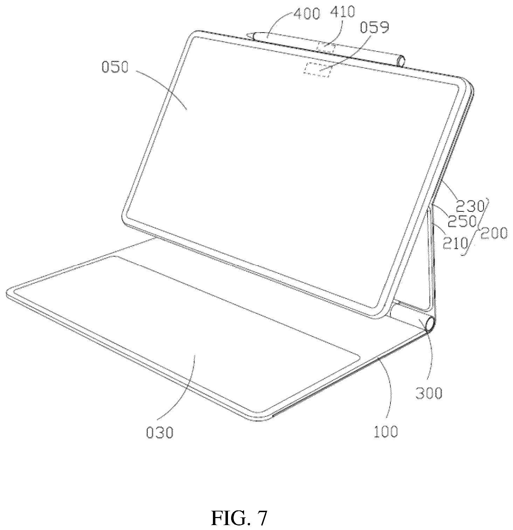

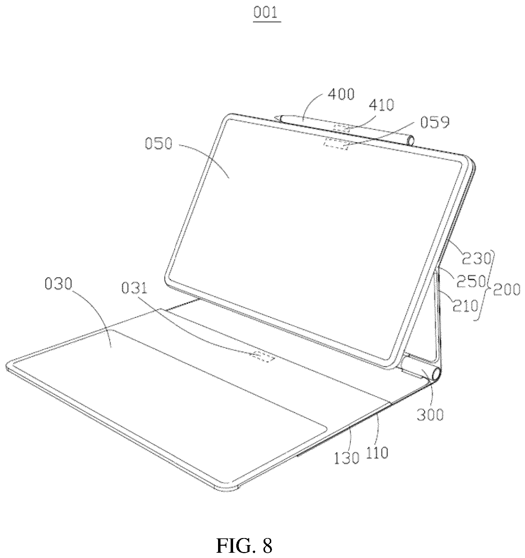

FIG. 7 is a diagram of a structure of the electronic device 001 according to an implementation of this application. The second cover 200 is in the open location relative to the first cover 100, and the stylus 400 magnetically attracts an end that is of the second electronic component 050 and that is away from the hinged part 300. FIG. 8 is a diagram of a structure of the electronic device 001 according to an implementation of this application. The second sliding member 130 slides, relative to the first sliding member 110, to a location away from the hinged part 300, and the stylus 400 magnetically attracts the end that is of the second electronic component 050 and that is away from the hinged part 300.

As shown in FIG. 7 and FIG. 8, the second electronic component 050 may be provided with the second magnetic attraction member 057 on the side close to the accommodation cavity 011, and may alternatively be provided with a third magnetic attraction member 059 at another location. For example, the third magnetic attraction member 059 is disposed on a side that is of the second electronic component 050 and that is away from the accommodation cavity 011. When the second cover 200 is in the open location relative to the first cover 100, after the stylus 400 is taken out from the accommodation cavity 011, the stylus 400 may be further absorbed to the side that is of the second electronic component 050 and that is away from the accommodation cavity 011 through magnetic attraction between the third magnetic attraction member 059 and the magnetic member 410. When the stylus 400 is absorbed to the side that is of the second electronic component 050 and that is away from the accommodation cavity 011, the operator can conveniently temporarily store the stylus 400 when the second cover 200 is in the open location relative to the first cover 100.

The relative rotation of the first cover part 210 and the second cover part 230 may allow the operator to conveniently take out the stylus 400 from the accommodation cavity 011. In addition, the first cover part 210, the first cover 100, and a part that is of the second electronic component 050 and that is separated from the first cover part 210 may form a triangular structure, an end that is of the second electronic component 050 and that is away from the second cover part 230 (an end that is of the second electronic component 050 and that is close to the accommodation cavity 011 when the second cover 200 is in the closed location relative to the first cover 100) can be carried on the first cover 100 or the first electronic component 030, and the foregoing triangular structure enables the second electronic component 050 to maintain a location stably.

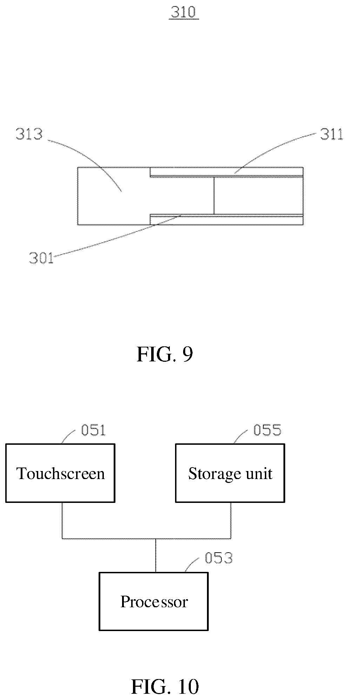

FIG. 9 is a sectional view of the first hinged structure 310 according to an implementation of this application.

As shown in FIG. 9, the first hinged structure 310 includes a first connector 311 and a second connector 313. The first connector 311 is hollow and cylindrical, one end of the second connector 313 is solid and cylindrical, and the first connector 311 and the second connector 313 are coaxially disposed. The second connector 313 extends into a rotation cavity of the first connector 311, and the first connector 311 and the second connector 313 may be connected in a relatively rotative manner around the axis 010a. The first connector 311 is connected to the first sliding member 110, and the second connector 313 is connected to the second cover part 230. When the first connector 311 rotates relative to the second connector 313, the first cover 100 rotates relative to the second cover 200.

A damping member 301 is disposed between an inner wall of the rotation cavity of the first connector 311 and the second connector 313, and rotation between the first connector 311 and the second connector 313 is limited by using the damping member 301. The damping member 301 is disposed so that rotation can be performed only when there is sufficient torque between the first connector 311 and the second connector 313. When no sufficient torque is applied to the first cover 100 or the second cover 200, the first cover 100 and the second cover 200 may maintain relative locations. Optionally, the damping member 301 is a damping layer made of a high friction coefficient material, and the damping layer covers the inner wall of the rotation cavity and is in contact with the second connector 313.

The second hinged structure 330 includes a third connector 331 and a fourth connector 333. The third connector 331 is hollow and cylindrical, one end of the fourth connector 333 is solid and cylindrical, and the third connector 331 and the fourth connector 333 are coaxially disposed. The fourth connector 333 extends into a rotation cavity of the third connector 331, and the third connector 331 and the fourth connector 333 may be connected in a relatively rotative manner around the axis 010a. The third connector 331 is connected to the first sliding member 110, and the fourth connector 333 is connected to the second cover part 230. When the third connector 331 rotates relative to the fourth connector 333, the first cover 100 rotates relative to the second cover 200.

A damping member 301 is also disposed between an inner wall of the rotation cavity of the third connector 331 and the fourth connector 333, and rotation between the first connector 311 and the second connector 313 is limited by using the damping member 301. The damping member 301 is disposed so that rotation can be performed only when there is sufficient torque between the third connector 331 and the fourth connector 333. When no sufficient torque is applied to the first cover 100 or the second cover 200, the first cover 100 and the second cover 200 may maintain relative locations. Optionally, the damping member 301 is a damping layer made of a high friction coefficient material, and the damping layer covers the inner wall of the rotation cavity and is in contact with the fourth connector 333.

The second cover 200 has an open location and a closed location relative to the first cover 100. The second cover 200 in the open location is capable of rotating around the axis 010a to the closed location by using the hinged part 300. When the second cover 200 is located in the closed location relative to the first cover 100, the first cover 100 is parallel to the second cover part 230 of the second cover 200, and the first electronic component 030 and the second electronic component 050 are clamped between the first cover 100 and the second cover 200. In addition, the second cover 200 and the first cover 100 rotatively rotate to locations parallel to each other, so that the first cover 100 and the second cover 200 can further better protect the first electronic component 030 and the second electronic component 050. In addition, when the first cover 100 and the second cover 200 rotate to be relatively parallel, an opening that is of the accommodation cavity 011 and that faces the first cover 100 and the second cover 200 is smaller, so that the stylus 400 can be stored in the accommodation cavity 011 more stably.

A protective layer 0111 is further disposed on an inner wall of the accommodation cavity 011, and the protective layer 0111 may be a fluff layer. When the stylus 400 is accommodated in the accommodation cavity 011, the stylus 400 is in contact with the protective layer 0111, and the protective layer 0111 is soft in texture, to protect the stylus 400 and prevent a hard object from being in contact with the stylus 400 and scratching a surface of the stylus 400.

The first electronic component 030 includes a keyboard. The keyboard may be a mechanical keyboard, a touch keyboard, or the like. After being connected to the first cover 100, the keyboard can rotate with the first cover 100 relative to the second cover 200. In another embodiment, the first electronic component 030 may alternatively be a touchpad. The touchpad may also be used as a mouse pad, or may be combined with the stylus 400/an external tool to form functions such as cursor movement and selection of the mouse.

FIG. 10 is a diagram of modules of the second electronic component 050 according to an implementation of this application.

As shown in FIG. 10, the second electronic component 050 is a tablet computer, and the tablet computer includes a touchscreen 051, a processor 053, and a storage unit 055. The storage unit 055 of the tablet computer stores a software system architecture, and the software system architecture includes an operating system and an application program. The storage unit 055 is electrically connected to the processor 053, and the processor 053 is invoked, by using the software system architecture, to perform a data operation. The first electronic component 030 is in a communication connection to the second electronic component 050, so that the first electronic component 030 may transmit information to the second electronic component 050. A form of the communication connection between the first electronic component 030 and the second electronic component 050 may be a wired communication connection, or may be a wireless communication connection. The first electronic component 030 may provide input information required by the software system architecture for the second electronic component 050. It may be understood that the second electronic component 050 may alternatively be an electronic component that has a touchscreen 051 and a processor 053, such as an electronic book.

The stylus 400 has a first end 401 and a second end 403 that are opposite to each other. When the first end 401 of the stylus 400 has a tip, and the tip of the stylus 400 is in contact with the touchscreen 051 of the second electronic component 050, the tip of the stylus 400 is different from another part of the stylus 400 in having a smaller contact surface, so that it is convenient to control path input on the touchscreen 051 by using the stylus 400.

When the stylus 400 is accommodated in the accommodation cavity 011, on a projection surface perpendicular to the axis 010a, a projection of the stylus 400 is located in a projection of the hinged part 300. The first cover 100 drives the first electronic component 030 to move around an outer contour of the hinged part 300, the second cover 200 drives the second electronic component 050 to move around the outer contour of the hinged part 300, and the stylus 400 does not protrude from the outer contour of the hinged part 300. When the first cover 100 drives the first electronic component 030 to rotate around the hinged part 300, and the second cover 200 drives the second electronic component 050 to rotate around the hinged part 300, the stylus 400 does not affect rotation of the first cover 100 and the second cover 200. In addition, rotation of the first cover 100 and the second cover 200 is also unlikely to cause damage to the stylus 400.

In the protective cover 010, the stylus 400 is stored by using the accommodation cavity 011 between the first hinged structure 310 and the second hinged structure 330. The first hinged structure 310 and the second hinged structure 330 limit movement of the stylus 400, so that a probability that the stylus 400 falls between the first cover 100 and the second cover 200 can be reduced. This facilitates placement of the stylus 400 when the first electronic component 030 and the second electronic component 050 are not used. When the first electronic component 030 or the second electronic component 050 is installed in the protective cover 010, the stylus 400 magnetically attracts the first electronic component 030 or the second electronic component 050 by using the magnetic member 410, so that when the first electronic component 030 and the second electronic component 050 move relative to the hinged part 300, the stylus 400 can be driven to leave the accommodation cavity 011.

The foregoing descriptions are merely specific implementations of this application, but are not intended to limit the protection scope of this application. Any variation or replacement within the technical scope disclosed in this application shall fall within the protection scope of this application.

## Claims

1. An electronic device, comprising a first cover, a second cover, and a hinged part, wherein the first cover and the second cover are rotatively connected by using the hinged part around an axis, the first cover is configured to connect to a first electronic component, the second cover is configured to connect to a second electronic component, and the electronic device further comprises a stylus;
the hinged part comprises a first hinged structure and a second hinged structure, an accommodation cavity extending along the axis is formed between the first hinged structure and the second hinged structure, and the accommodation cavity is configured to accommodate the stylus;
the stylus comprises a magnetic member, and when the stylus is accommodated in the accommodation cavity, the magnetic member is configured to magnetically attract the first electronic component or the second electronic component; and
the second cover comprises:
a first cover part, rotatively connected to the first cover by using the hinged part;
a rotation member; and
a second cover part, rotatively connected to the first cover part by using the rotation member, wherein the second cover part is configured to connect to the second electronic component, and when a side that is of the second cover part and that is close to the accommodation cavity is relatively away from the accommodation cavity, the second electronic component drives the stylus to leave the accommodation cavity.

2. The electronic device according to claim 1, wherein the first cover is configured to be integrally formed with the first electronic component.

3. The electronic device according to claim 1, wherein the second electronic component is detachable from the second housing.

4. The electronic device according to claim 1, wherein an axis of relative rotation of the first cover part and the second cover part is parallel to the axis.

5. The electronic device according to claim 1, wherein the magnetic member comprises a ferromagnetic metal block.

6. The electronic device according to claim 1, wherein when the stylus is accommodated in the accommodation cavity,
on a projection surface perpendicular to the axis, a projection of the stylus is located in a projection of the hinged part.

7. The electronic device according to claim 1, wherein the first hinged structure comprises a first connector and a second connector;
the first connector and the second connector are rotatively connected around the axis, the first connector is connected to the first cover, and the second connector is connected to the second cover; and
a damping member is disposed between the first connector and the second connector, to provide a friction force when the first connector rotates relative to the second connector.

8. The electronic device according to claim 1, wherein the second cover has an open location and a closed location relative to the first cover;
the second cover in the open location is capable of rotating around the axis to the closed location; and
when the second cover is at the closed location relative to the first cover, the first cover is parallel to the second cover.

9. The electronic device according to claim 1, wherein a protective layer is disposed on an inner wall of the accommodation cavity, and the protective layer is configured to be in contact with the stylus.

10. The electronic device according to claim 1, wherein the first electronic component is configured to be in a communication connection to the second electronic component.

11. The electronic device according to claim 1, wherein the first electronic component comprises a keyboard or a touchpad.

12. The electronic device according to claim 1, wherein the second electronic component comprises a touchscreen and a processor, and the stylus is configured to input data to the processor by using the touchscreen.
